(19) Europäisches Patentamt
European Patent Office
Office européen des brevets

(11) **EP 1 901 933 B1**

(12) **FASCICULE DE BREVET EUROPEEN**

(45) Date de publication et mention
de la délivrance du brevet:
**15.09.2010 Bulletin 2010/37**

(21) Numéro de dépôt: **06779012.1**

(22) Date de dépôt: **04.07.2006**

(51) Int Cl.:
***B60G 17/016*** (2006.01)

(86) Numéro de dépôt international:
**PCT/FR2006/050672**

(87) Numéro de publication internationale:
**WO 2007/003861 (11.01.2007 Gazette 2007/02)**

(54) **PROCÉDÉ ET SYSTÈME ANTI-ROULIS D'UN VÉHICULE ET VÉHICULE CORRESPONDANT**

ANTIROLLVERFAHREN UND SYSTEM FÜR EIN FAHRZEUG UND ENTSPRECHENDES FAHRZEUG

ANTI-ROLLING METHOD AND SYSTEM FOR A VEHICLE AND CORRESPONDING VEHICLE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.07.2005 FR 0507113**

(43) Date de publication de la demande:
**26.03.2008 Bulletin 2008/13**

(73) Titulaire: **RENAULT S.A.S.**
**92100 Boulogne Billancourt (FR)**

(72) Inventeur: **POTHIN, Richard**
**F-78760 Jouars Ponchartrain (FR)**

(56) Documents cités:
**EP-A- 1 577 127        US-A- 4 834 419**
**US-A- 5 004 264        US-A- 5 987 366**
**US-A1- 2004 117 085**

EP 1 901 933 B1

**Description**

La présente invention relève du domaine des systèmes de commande de véhicules terrestres, en particulier de véhicules automobiles à roues.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule, et des roues arrière directrices ou non-directrices.

Le document US 2004/0117085 décrit un système de commande de la stabilité en lacet d'un véhicule équipé d'un capteur d'accélération latérale, d'un capteur de roulis, d'un capteur d'angle de braquage et d'au moins un capteur de vitesse fournissant des informations à une unité de commande de la stabilité de lacet, une unité de commande de la stabilité de roulis et une unité de fonction de la priorité et d'intégration permettant de commander un système de suspension active et un système de barre anti-roulis active.

Le document US 4 939 654 décrit un système de commande des caractéristiques de conduite d'un véhicule en fonction du braquage des roues du véhicule au moyen d'un capteur d'angle de braquage et d'au moins un capteur de vitesse pour agir sur des amortisseurs pilotables.

Toutefois, ces systèmes nécessitent de nombreux capteurs et procurent au véhicule un comportement insuffisamment stable lors de certaines sollicitations du conducteur ou sur certains états de chaussée. Certaines situations peuvent engendrer une perte de contrôle du véhicule, par exemple un évitement d'obstacle simple ou double. Les pertes de contrôle dans ce cas sont souvent dues à une réponse inadaptée du véhicule car trop vives, pas assez amorties ou encore peu prévisibles.

L'invention vise un système de commande anti-roulis assurant une sécurité, une sensation de sécurité, un confort et un plaisir de conduite élevé.

Le document US 5004264 décrit un dispositif de commande de position pour suspension d'automobile de type stratégie bas niveau correspondant aux commandes directes des actionneurs.

Le procédé de commande de système anti-roulis pour un véhicule à au moins trois roues, prévoit qu'en fonction de l'angle de braquage de roues avant ou de l'accélération latérale du véhicule, de données de déplacement du véhicule, et d'une consigne antérieure de braquage de système anti-roulis, on élabore une consigne actuelle de correction de roulis et on envoie ladite consigne actuelle de correction de roulis à un actionneur anti-roulis ou une suspension pilotable agissant sur la raideur d'une suspension du véhicule. On peut ainsi contrer de façon efficace le roulis affectant un véhicule.

Dans un mode de réalisation, les données de déplacement du véhicule comprennent la vitesse longitudinale du véhicule. La vitesse longitudinale peut être mesurée par au moins un capteur faisant partie d'un système anti blocage de roues.

Dans un mode de réalisation, les données de déplacement du véhicule comprennent une mesure de l'angle de braquage de roues arrière, dans le cas d'un véhicule à roues arrière directrices.

Avantageusement, on règle de façon séparée la réponse dynamique du véhicule et la réponse statique du véhicule. Le réglage peut être effectué de façon simple.

Avantageusement, à partir d'un modèle du véhicule et de données de déplacement du véhicule, on élabore une consigne actuelle de correction de roulis. La consigne actuelle de correction de roulis peut être élaborée en boucle ouverte. En d'autres termes, la présence d'un capteur de roulis n'est pas indispensable. La consigne de correction de roulis peut être élaborée en fonction de la dynamique dudit actionneur anti-roulis ou suspension pilotable.

Le système anti-roulis pour un véhicule à au moins trois roues comprend un moyen pour élaborer une consigne actuelle de correction de roulis en fonction de l'angle de braquage de roues avant ou de l'accélération du véhicule, de données de déplacement du véhicule et d'une consigne antérieure de correction de roulis, et un actionneur anti-roulis ou une suspension pilotable capable d'agir sur la raideur d'une suspension du véhicule à réception de ladite consigne actuelle de correction de roulis.

Dans un mode de réalisation, le moyen pour élaborer une consigne comprend un module de modélisation apte à fournir une estimation d'au moins une variable.

Dans un mode de réalisation, le module de modélisation comprend une entrée d'angle de braquage de roues avant ou d'accélération latérale du véhicule, une entrée de vitesse de déplacement du véhicule, et une entrée de consigne antérieure de braquage de roues arrière.

Dans un mode de réalisation, le module de modélisation comprend une sortie d'angle de roulis, une sortie de vitesse de roulis et une sortie de couple filtrée.

Le moyen pour élaborer une consigne peut comprendre un module de réglage de partie transitoire et un module de réglage de partie statique.

Le module de réglage de partie transitoire peut comprendre des sorties reliées aux entrées du module de réglage de parties statiques. Le module de réglage de parties statiques peut comprendre en outre une entrée d'angle de braquage de roues avant ou d'accélération latérale du véhicule et une entrée de vitesse de déplacement du véhicule.

Le véhicule pourvu d'un châssis et d'au moins trois roues reliées élastiquement au châssis, comprend un système anti-roulis comprenant un moyen pour élaborer une consigne actuelle de correction de roulis en fonction de l'angle de braquage de roues avant ou de l'accélération latérale du véhicule, de données de déplacement du véhicule, et d'une consigne antérieure de correction de roulis, et un actionneur anti-roulis ou une suspension active capable d'agir sur la raideur d'une suspension du véhicule à réception de ladite consigne actuelle de correction de roulis.

En se servant de l'angle de braquage de roues avant, le procédé de commande est particulièrement rapide. En se servant de l'accélération latérale du véhicule, le procédé de commande permet un excellent comportement du véhicule, notamment sur chaussée présentant une faible adhérence.

La présente invention sera mieux comprise à la lecture de la description détaillée de quelques modes de réalisation pris à titre d'exemples nullement limitatifs et illustrés par les dessins annexés, sur lesquels:

- la figure 1 est une vue schématique d'un véhicule équipé d'un système de commande selon un aspect de l'invention;
- la figure 2 est un schéma logique du système de la figure 1;
- la figure 3 est une vue schématique d'un véhicule équipé d'un système de commande selon un autre aspect de l'invention; et
- la figure 4 est un schéma logique du système de la figure 3.

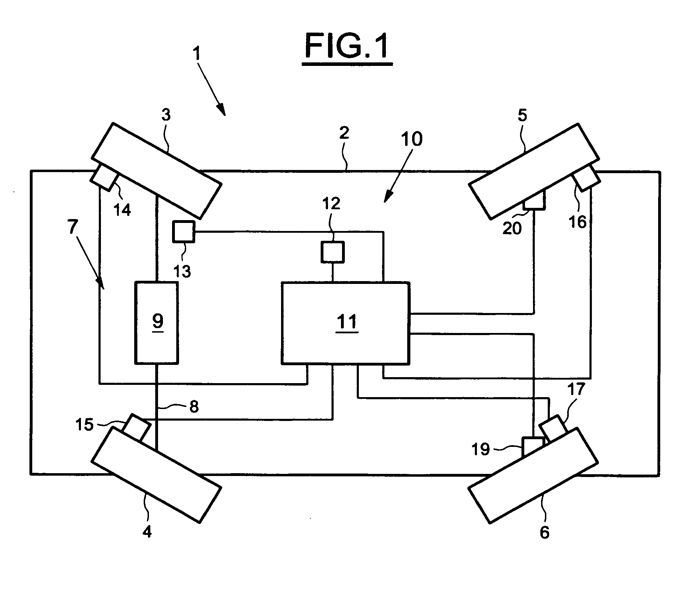

Comme on peut le voir sur la figure 1, le véhicule 1 comprend un châssis 2, deux roues avant directrices 3 et 4 et deux roues arrière 5 et 6 qui peuvent ou non être directrices. Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule. Dans la variante à roues arrière directrices, des actionneurs 19 et 20 de braquage desdites roues arrière sont prévus.

Le système anti-roulis 10 comprend une unité de commande 11, un capteur 12 de l'accélération latérale $\gamma_T$ du véhicule, un capteur 13 de la vitesse de rotation des roues avant permettant de déterminer la vitesse V du véhicule. Le capteur 12 peut être disposé au centre de gravité du véhicule 1.

En outre, le système anti-roulis 10 comprend des actionneurs 14 à 17 capables d'agir sur la raideur de la suspension disposée entre le châssis 2 et respectivement les roues 3 à 6. Le capteur de vitesses peut être de type optique ou encore magnétique, par exemple à effet Hall, coopérant avec un codeur solidaire d'une partie mobile, tandis que le capteur est non-tournant. Le capteur d'accélération peut être de type accéléromètre (masselotte et ressort). Les actionneurs 14 à 17 peuvent comprendre des vérins hydrauliques ou électriques capables de modifier la raideur de la suspension ou encore des éléments de suspension active à raideur commandée.

L'unité de commande 11 peut être réalisée sous la forme d'un microprocesseur équipé d'une mémoire vive, d'une mémoire morte, d'une unité centrale et d'interfaces d'entrée-sortie permettant de recevoir des informations des capteurs et d'envoyer les instructions aux actionneurs 14 à 17.

Plus précisément, l'unité de commande 11 comprend un bloc d'entrée 22 recevant les signaux en provenance des capteurs 12 et 13, plus particulièrement la vitesse du véhicule V et l'accélération transversale $\gamma_T$. La vitesse du véhicule peut être obtenue en faisant la moyenne de la vitesse des roues avant ou des roues arrière, telle que mesurée par des capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues.

L'unité de commande 11 comprend également un modèle de véhicule 23, permettant d'estimer les informations qui ne sont pas mesurées et qui sont nécessaires à la commande. Le modèle 23 permet de prédire le comportement intrinsèque du châssis 2, c'est-à-dire sa réponse en roulis en fonction de l'accélération transversale $\gamma_T$ du véhicule. Le modèle peut par exemple être basé sur l'équation simplifiée de l'élément de transfert entre l'accélération transversale $\gamma_T$ et l'angle de roulis de la caisse du véhicule, noté $\theta$ d'une part, et entre le couple appliqué par l'actionneur, noté $\mu_f$ et l'angle de roulis de la caisse du véhicule $\theta$, d'autre part:

$$\left(I_{xx} + Mh_0^2\right)\ddot{\theta} + \left(\frac{E_1^2}{2}c_1 + \frac{E_2^2}{2}c_2\right)\dot{\theta} + \left(\frac{E_1^2}{2}k_1 + \frac{E_2^2}{2}k_2 - Mgh_0\right)\theta = Mh_0\gamma_T + u_f$$

avec $I_{xx}$, l'inertie de la caisse du véhicule autour de son axe de roulis, c'est-à-dire un axe longitudinal placé plus haut que le sol et pouvant être légèrement incliné vers l'avant, M la masse totale du véhicule, $h_0$ la hauteur du centre de gravité par rapport à l'axe de roulis de la caisse du véhicule, $E_1$ la voie de l'essieu avant, $E_2$ la voie de l'essieu arrière,

$c_1$ le coefficient d'amortissement de l'essieu avant, $c_2$ le coefficient d'amortissement de l'essieu arrière, $k_1$ la raideur de l'essieu avant, $k_2$ la raideur de l'essieu arrière, g la constante de gravité, $\dot{\theta}$ la vitesse de roulis de la caisse du véhicule et $\ddot{\theta}$ l'accélération de roulis de la caisse de véhicule. On peut éviter de mesurer le couple réellement appliqué par les actionneurs en modélisant la dynamique de l'actionneur:

$$\mu_f = \frac{\mu_c}{\tau_a s + 1}$$

avec $\mu_f$ le couple appliqué, $\mu_c$ la consigne de couple, $\tau_a$ la dynamique de l'actionneur et s l'opérateur de Laplace. L'équation d'état associée à ce modèle est la suivante:

$$\begin{pmatrix} \dot{\theta}_c \\ \ddot{\theta}_c \\ \dot{u}_f \end{pmatrix} = \begin{pmatrix} 0 & 1 & 0 \\ -\omega_n^2 & -2\xi\omega_n & G_u \\ 0 & 0 & -\dfrac{1}{\tau_a} \end{pmatrix} \cdot \begin{pmatrix} \theta_c \\ \dot{\theta}_c \\ u_f \end{pmatrix} + \begin{pmatrix} 0 \\ G_\gamma \\ 0 \end{pmatrix} \gamma_T + \begin{pmatrix} 0 \\ 0 \\ \dfrac{1}{\tau_a} \end{pmatrix} u_c$$

$$y = \begin{pmatrix} 1 & 0 & 0 \\ 0 & 1 & 0 \\ 0 & 0 & 1 \end{pmatrix} \cdot \begin{pmatrix} \theta_c \\ \dot{\theta}_c \\ u_f \end{pmatrix}$$

avec:

$$G_\gamma = \frac{Mh_0}{\left(I_{xx} + Mh_0^2\right)} \qquad \omega_n = \sqrt{\frac{\frac{1}{2}\left(E_1^2 k_1 + E_2^2 k_2\right) - Mgh_0}{I_{xx} + Mh_0^2}}$$

$$G_u = \frac{1}{\left(I_{xx} + Mh_0^2\right)} \qquad \xi = \frac{1}{4}\left(\frac{E_1^2 c_1 + E_2^2 c_2}{I_{xx} + Mh_0^2}\right)$$

et où y est la sortie considérée.

Le modèle 23 fournit donc un angle de roulis calculé $\theta_c$, une vitesse de roulis calculée $\dot{\theta}_c$ et un couple de roulis filtré par la dynamique de l'actionneur et donc réellement appliqué $\mu_f$.

L'unité de commande 11 comprend en outre un bloc 24 de calcul des transitoires recevant en entrée les sorties précitées du modèle 23 ainsi que la vitesse V du véhicule 1. Le bloc 24 calcule la commande qui permet d'agir sur la réponse transitoire et ce par un placement de pôle. Si on note les trois pôles du système décrit ci-dessus de la façon suivante:

**4**

$$a_1(V)+b_1(V).i \quad a_2(V)+b_2(V).i \quad a_3(V)+b_3(V).i$$

où les parties réelles des pôles à la vitesse V sont notées $a_i(V)$ et les parties imaginaires sont notées $b_i(V)$. On cherche alors le correcteur $K=[K_1(V)\ K_2(V)\ K_3(V)]$ qui placera les pôles du système bouclé en :

$$Tdyn_{11}(V).a_1(V)+Tdyn_{12}(V).b_1(V).i$$

$$Tdyn_{21}(V).a_2(V)+Tdyn_{22}(V).b_2(V).i$$

$$Tdyn_{31}(V).a_3(V)+Tdyn_{32}(V).b_3(V).i$$

où $Tdyn_{11}$, $Tdyn_{12}$, $Tdyn_{21}$, $Tdyn_{22}$, $Tdyn_{31}$, $Tdyn_{32}$ sont les paramètres de réglage (variables en fonction de la vitesse du véhicule V) de la réponse transitoire du véhicule.

Le correcteur $K(V_0)$ peut se calculer, pour chaque vitesse $V_0$ choisie, par la méthode de placement de pôle décrite dans l'article « Robust Pole Assignment in Linear State Feedback », de J. Kautsky et N.K. Nichols, publié dans Int. J. Control, 41 (1985), pages 1129 à 1155.

On obtient ainsi la première partie de la commande :

$$u_{c\text{-}transitoire} = K_1(V).\theta_c - K_1(V).\dot{\theta}_c - K_3(V).u_f$$

L'on peut remarquer que lorsque les paramètres de réglage sont égaux à 1, la réponse dynamique du véhicule n'est pas modifiée, qu'un paramètre supérieur à 1 provoque une augmentation de la vivacité de la réponse du véhicule en roulis et qu'un paramètre inférieur à 1 provoque une diminution de la vivacité de la réponse du véhicule en roulis. A titre d'exemple, on peut prendre le réglage suivant :

$Tdyn_{11} = 0,8$
$Tdyn_{12} = 0$
$Tdyn_{21} = 0,8$
$Tdyn_{22} = 0$
$Tdyn_{31} = 0,8$
$Tdyn_{32} = 0$

Ce réglage permet de ralentir la réponse dynamique du véhicule tout en supprimant les oscillations en roulis. Ce réglage permet d'améliorer le confort du passager qui ressentira une prise de roulis moins brusque lors de l'entrée dans un virage.

Le bloc 24 fournit donc en sortie les coefficients $K_1$, $K_2$ et $K_3$ et la première partie de la commande notée $\mu_{c\text{-}transitoire}$.

L'unité de commande 11 comprend en outre un bloc 25 de calcul de la commande statique noté $\mu_{c\text{-}statique}$ recevant en entrée les coefficients $K_1$, $K_2$ et $K_3$ en provenance du bloc 24, la vitesse V du véhicule et l'accélération transversale $\gamma_T$. La commande $\mu_{c\text{-}statique}$ permet de modifier la valeur stabilisée de l'angle de roulis de la caisse atteint suite à un coup de volant d'amplitude donnée. Le résultat peut être exprimé par comparaison avec le gain statique que l'on obtiendrait sur le même véhicule sans dispositif anti-roulis actif:

EP 1 901 933 B1

$$\left[\frac{\theta_{STABILISE}}{\gamma_T}\right]_{ANTIROULIS\_ACTIF} = Tgs.\left[\frac{\theta_{STABILISE}}{\gamma_T}\right]_{SANS\_ANTIROULIS\_ACTIF}$$

où Tgs est le paramètre de réglage qui peut varier, si nécessaire, en fonction de la vitesse V.

La deuxième partie de la commande se calcule en fonction du paramètre Tgs de la façon suivante:

$$u_{c-statique} = \left[(Tgs-1).(1+K_3(V)).\frac{G_\gamma}{G_u} + Tgs.\frac{K_1(V).G_\gamma}{\omega_n^2}\right].\gamma_T$$

avec, pour rappel:

$$G_\gamma = \frac{Mh_0}{\left(I_{xx}+Mh_0^2\right)} \qquad \omega_n = \sqrt{\frac{\frac{1}{2}\left(E_1^2 k_1 + E_2^2 k_2\right) - M.g.h_0}{I_{xx}+Mh_0^2}}$$

$$G_u = \frac{1}{\left(I_{xx}+Mh_0^2\right)} \qquad \xi = \frac{1}{4}\left(\frac{E_1^2 c_1 + E_2^2 c_2}{I_{xx}+Mh_0^2}\right)$$

L'on peut remarquer que lorsque le paramètre Tgs est égal à 1, la réponse statique du véhicule n'est pas modifiée, que lorsque le paramètre Tgs est supérieur à 1, la réponse statique du véhicule est augmentée et que lorsque le paramètre Tgs est inférieur à 1, la réponse statique du véhicule est diminuée. À titre d'exemple, on peut prendre Tgs égal à 0,8, qui permet de diminuer le roulis atteint par la caisse du véhicule lors d'un virage stabilisé, donc d'améliorer sensiblement le confort des passagers.

L'unité de commande 11 se complète par un additionneur 26 et une sortie 27. L'additionneur 26 reçoit sur une entrée la sortie de commande $\mu_{c-transitoire}$ du bloc 24 et sur une autre entrée positive la sortie de commande $\mu_{c-statique}$ du bloc 25. La sortie de l'additionneur 26 est reliée, d'une part, à la sortie générale 27 de l'unité de commande 11 et, d'autre part, à l'entrée du modèle 23 pour fournir audit modèle 23 la consigne de correction de roulis venant d'être calculée.

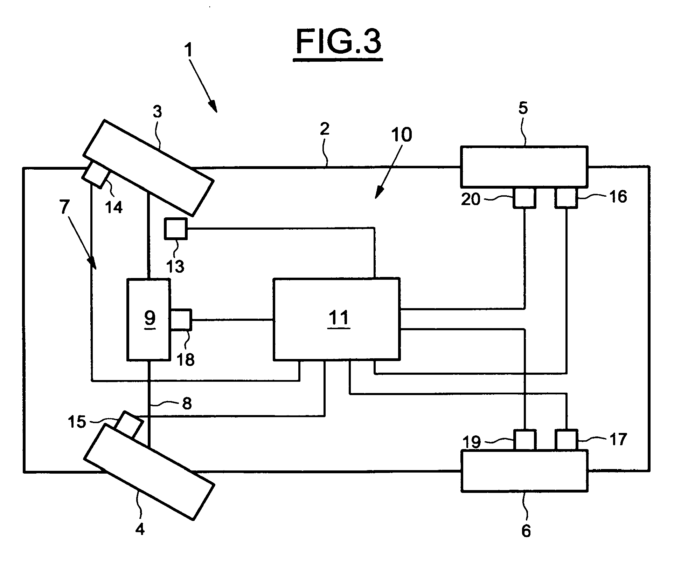

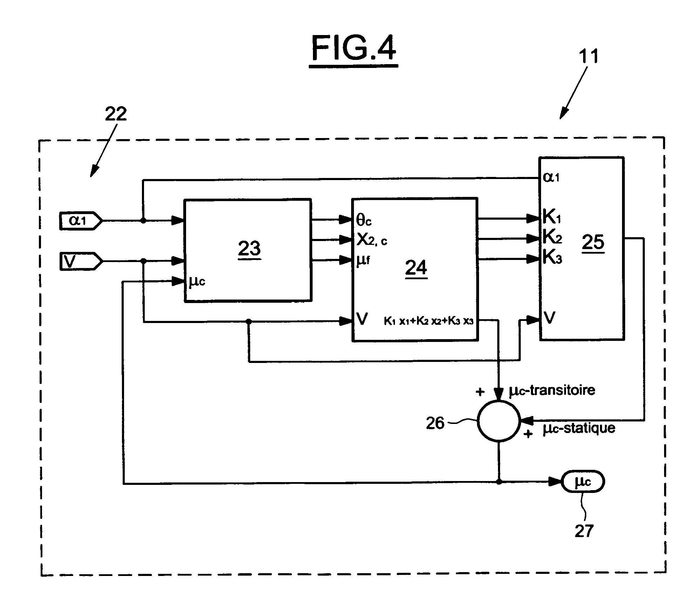

Dans le mode de réalisation illustré sur la figure 3, le capteur d'accélération transversal 12 est remplacé par un capteur 18 de la position de braquage des roues avant 3 et 4, par exemple positionné sur l'actionneur 9. L'angle de braquage des roues avant 3 et 4 est noté $\alpha_1$ et est utilisé par le modèle 23 du véhicule, tel qu'illustré sur la figure 4, pour calculer l'angle de roulis calculé $\theta_c$, un état du véhicule en roulis noté $X_{2,c}$ et le couple de roulis filtré par la dynamique de l'actionneur est donc réellement appliqué, noté $\mu_f$.

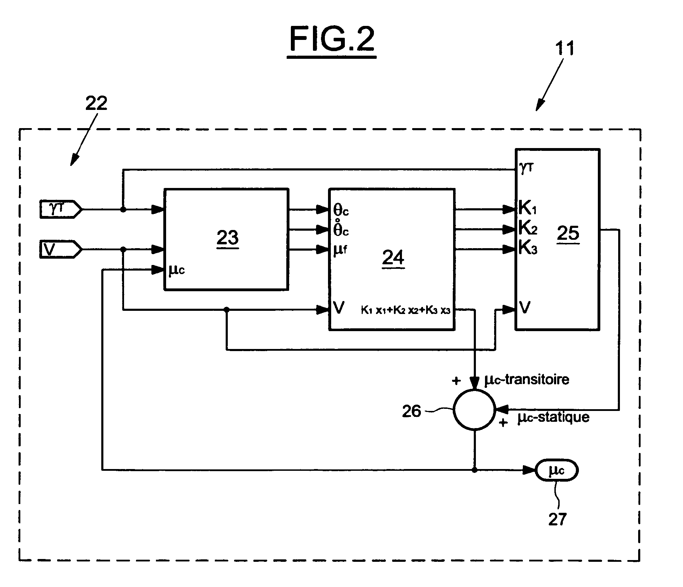

L'unité de commande 11, telle qu'illustrée sur la figure 4, est proche de celle illustrée sur la figure 2, à ceci près que le modèle 23 peut par exemple être basé sur l'équation suivante, avec $\alpha_1$ l'angle de braquage des roues avant:

$$\left(I_{xx}+Mh_0^2\right)\ddot\theta + \left(\frac{E_1^2}{2}c_1 + \frac{E_2^2}{2}c_2\right)\dot\theta + \left(\frac{E_1^2}{2}k_1 + \frac{E_2^2}{2}k_2 - Mgh_0\right)\theta = MVh_0\frac{12}{L}\dot\alpha_1 + MV^2\frac{h_0}{L}\alpha_1 + u_f$$

Le couple réellement appliqué par l'actionneur $\mu_f$ n'est comme précédemment pas mesuré, mais obtenu en modélisant la dynamique de l'actionneur de la même façon que précédemment.

6

$$u_f = \frac{\mu_c}{\tau_a s + 1}$$

L'équation d'état associée à ce modèle est la suivante:

$$\begin{pmatrix} \dot{\theta}_c \\ \dot{X}_{2,c} \\ \dot{u}_f \end{pmatrix} = \begin{pmatrix} -2\xi\omega_n & 1 & 0 \\ -\omega_n^2 & 0 & G_u \\ 0 & 0 & -\frac{1}{\tau_a} \end{pmatrix} \cdot \begin{pmatrix} \theta_c \\ X_{2,c} \\ u_f \end{pmatrix} + \begin{pmatrix} G_\alpha.\tau \\ G_\alpha \\ 0 \end{pmatrix} \alpha_1 + \begin{pmatrix} 0 \\ 0 \\ \frac{1}{\tau_a} \end{pmatrix} u_c$$

$$y = \begin{pmatrix} 1 & 0 & 0 \\ 0 & 1 & 0 \\ 0 & 0 & 1 \end{pmatrix} \cdot \begin{pmatrix} \theta_c \\ X_{2,c} \\ u_f \end{pmatrix}$$

avec:

$$G_\alpha = \frac{MV^2 h0}{L.\left(I_{xx} + Mh_0^2\right)} \qquad \omega_n = \sqrt{\frac{\frac{1}{2}\left(E_1^2 k_1 + E_2^2 k_2\right) - Mgh_0}{I_{xx} + Mh_0^2}}$$

$$\tau = \frac{L_2}{V} \qquad \xi = \frac{1}{4}\left(\frac{E_1^2 c_1 + E_2^2 c_2}{I_{xx} + Mh_0^2}\right)$$

$$G_u = \frac{1}{\left(I_{xx} + Mh_0^2\right)}$$

et où y est la sortie considérée et $X_{2,c}$ est le deuxième état du véhicule en roulis défini par $X_{2,c} = 2\xi\omega_n\theta_c + \dot{\theta}_c - G_\alpha\tau.\alpha_1$.

Le bloc 24 de calcul des transitoires peut être similaire à celui illustré sur la figure 2.

Le bloc 25 de calcul de la commande statique permet de modifier la valeur stabilisée de l'angle de roulis de la caisse atteint suite à un coup de volant d'amplitude donnée. Le résultat est exprimé par comparaison avec le gain statique qui serait obtenu sur le même véhicule sans dispositif anti-roulis actif:

$$\left[\frac{\theta_{STABILISE}}{\alpha_1}\right]_{ANTIROULIS\_ACTIF} = Tgs.\left[\frac{\theta_{STABILISE}}{\alpha_1}\right]_{SANS\_ANTIROULIS\_ACTIF}$$

où Tgs est le paramètre de réglage qui peut varier, si nécessaire, en fonction de la vitesse V.

La deuxième partie de la commande se calcule en fonction du paramètre Tgs de la façon suivante:

$$u_{c-statique} = \left[(Tgs-1)(1+K_3(V))\frac{G_\alpha}{G_u} + Tgs\left(\frac{K_1(V)G_\alpha}{\omega_n^2} + \frac{2K_2(V)\xi G_\alpha}{\omega_n}\right) - K_2(V)G_\alpha\tau\right]\alpha_1$$

avec, pour rappel:

$$G_\alpha = \frac{MV^2 h0}{L.\left(I_{xx} + Mh_0^2\right)} \qquad \omega_n = \sqrt{\frac{\frac{1}{2}\left(E_1^2 k_1 + E_2^2 k_2\right) - Mgh_0}{I_{xx} + Mh_0^2}}$$

$$\tau = \frac{L_2}{V} \qquad \xi = \frac{1}{4}\left(\frac{E_1^2 c_1 + E_2^2 c_2}{I_{xx} + Mh_0^2}\right)$$

$$G_u = \frac{1}{\left(I_{xx} + Mh_0^2\right)}$$

L'unité de commande 11 se complète comme dans le mode de réalisation précédent, par un sommateur 26 recevant en entrée la sortie $\mu_{2\text{-transitoire}}$ du bloc 24, d'une part, et la sortie $\mu_{2\text{-statique}}$, d'autre part, provenant du bloc 25.

L'invention offre une loi de commande qui pilote le système d'anti-roulis actif et qui permet, grâce à une stratégie en boule ouverte de régler les réponses dynamique et statique en roulis du véhicule en fonction de l'accélération latérale ou de l'angle de braquage des roues avant. Le réglage peut par exemple être fonction de la vitesse V du véhicule. Le véhicule est conçu de manière à adopter le comportement le plus stable possible quels que soient la sollicitation du conducteur et l'état de la chaussée et offre une sécurité très élevée, une bonne sensation de sécurité, un confort et un plaisir de conduite optimisés.

L'invention s'applique particulièrement à des véhicules équipés de barres anti-roulis actives. Il est possible de se passer de capteurs de la dynamique en roulis du véhicule, ce qui permet de limiter le coût du système et de tenir compte de la dynamique de l'actionneur anti-roulis. La mise au point du réglage est rapide et intuitive, car les paramètres de réglage sont liés aux performances nominales du véhicule en l'absence de dispositif anti-roulis. En effet, les paramètres de réglage égaux à 1 ne modifient pas le comportement du véhicule, alors que les paramètres de réglage supérieurs à 1 rendent le comportement du véhicule plus vif et des paramètres de réglage inférieurs à 1 rendent le comportement du véhicule moins direct. La mise en oeuvre du système anti-roulis assure un bon comportement du véhicule, quelle que soit l'adhérence offerte par la roue sur laquelle se déplace le véhicule.

**EP 1 901 933 B1**

**Revendications**

1. Procédé de commande de système anti-roulis pour un véhicule à au moins trois roues, dans lequel en fonction de l'angle de braquage de roue avant ou de l'accélération latérale du véhicule, de données de déplacement du véhicule, et d'une consigne antérieure de correction de roulis, on élabore une consigne actuelle de correction de roulis et on envoie ladite consigne actuelle de correction de roulis à un actionneur anti-roulis ou une suspension pilotable agissant sur la raideur d'une suspension du véhicule, **caractérisé en ce que** l'on élabore la consigne actuelle de correction de roulis à partir d'un modèle du véhicule tenant compte de l'angle de braquage de roue avant ou de l'accélération latérale du véhicule, de la vitesse V de déplacement du véhicule, et de la consigne antérieure de braquage de roue arrière et comprenant une sortie d'angle de roulis, une sortie de vitesse de roulis et une sortie de couple filtré.

2. Procédé selon la revendication 1, dans lequel lesdites données de déplacement du véhicule comprennent la vitesse longitudinale V du véhicule.

3. Procédé selon la revendication 1 ou 2, dans lequel lesdites données de déplacement du véhicule comprennent une mesure de l'angle de braquage de roue arrière.

4. Procédé selon l'une quelconque des revendications précédentes, dans lequel on règle la réponse dynamique du véhicule et la réponse statique du véhicule de façon séparée.

5. Procédé selon l'une quelconque des revendications précédentes, dans lequel la consigne actuelle de correction de roulis est élaborée en boucle ouverte.

6. Procédé selon l'une quelconque des revendications précédentes, dans lequel la consigne de correction de roulis est élaborée en fonction de la dynamique dudit actionneur anti-roulis ou suspension pilotable.

7. Systéme anti-roulis pour un véhicule (1) à au moins trois roues, comprenant un moyen (11) pour élaborer une consigne actuelle de correction de roulis en fonction de l'angle de braquage de roue avant ou de l'accélération latérale du véhicule, de données de déplacement du véhicule, et d'une consigne antérieure de correction de roulis, et un actionneur (14 à 17) anti-roulis ou une suspension pilotable capable d'agir sur la raideur d'une suspension du véhicule à réception de ladite consigne actuelle de correction de roulis **caractérisé en ce que** ledit moyen pour élaborer une consigne actuelle comprend un module de modélisation du véhicule (23) comprenant une entrée d'angle de braquage de roue avant ou d'accélération latérale du véhicule, une entrée de vitesse V de déplacement du véhicule, et une entrée de consigne antérieure de braquage de roue arrière, apte à fournir une estimation d'au moins une variable comprenant une sortie d'angle de roulis, une sortie de vitesse de roulis et une sortie de couple filtré.

8. Système selon l'une des revendications 6 et 7, dans lequel ledit moyen pour élaborer une consigne comprend un module (24) de réglage de partie transitoire et un module (25) de réglage de partie statique.

9. Système selon la revendication 8, dans lequel ledit module (24) de réglage de partie transitoire comprend des sorties reliées aux entrées du module de réglage de partie statique, le module (25) de réglage de partie statique comprenant en outre une entrée d'angle de braquage de roue avant ou d'accélération latérale du véhicule et une entrée de vitesse V de déplacement du véhicule.

10. Véhicule (1) pourvu d'un châssis (2) et d'au moins trois roues directrices reliées élastiquement au châssis (2), comprenant un système anti-roulis comprenant un moyen (11) pour élaborer une consigne actuelle de correction de roulis en fonction de l'angle de braquage de roue avant ou de l'accélération latérale du véhicule, de données de déplacement du véhicule, et d'une consigne antérieure de correction de roulis, et un actionneur (14 à 17) anti-roulis ou une suspension pilotable capable d'agir sur la raideur d'une suspension du véhicule à réception de ladite consigne actuelle de correction de roulis **caractérisé en ce que** ladite élaboration de la consigne actuelle de correction de roulis se fassent en fonction d'un module du véhicule comprenant une entrée d'angle de braquage de roue avant ou d'accélération latérale du véhicule, une entrée de vitesse V de déplacement du véhicule, et une entrée de consigne antérieure de braquage de roue arrière et comprenant une sortie d'angle de roulis, une sortie de vitesse de roulis et une sortie de couple filtré.

**Claims**

1. Method for controlling an anti-roll system for a vehicle having at least three wheels, in which a current roll-correction instruction is formulated as a function of the steering angle of the front wheel or of the lateral acceleration of the vehicle, of data regarding the movement of the vehicle, and of an earlier roll-correction instruction, and the said current roll-correction instruction is sent to an anti-roll actuator or to a controllable suspension influencing the stiffness of a suspension of the vehicle, **characterized in that** the current roll-correction instruction is formulated on the basis of a model of the vehicle that takes into consideration the front wheel steering angle or the lateral acceleration of the vehicle, the speed V of travel of the vehicle, and the earlier rear wheel steering instruction, and that comprises a roll angle output, a roll rate output and a filtered torque output.

2. Method according to Claim 1, in which the said data regarding the movement of the vehicle comprises the longitudinal speed V of the vehicle.

3. Method according to Claim 1 or 2, in which the said data regarding the movement of the vehicle comprises a measurement of the rear wheel steering angle.

4. Method according to any one of the preceding claims, in which the dynamic response of the vehicle and the static response of the vehicle are regulated separately.

5. Method according to any one of the preceding claims, in which the current roll-correction instruction is formulated in open loop.

6. Method according to any one of the preceding claims, in which the roll-correction instruction is formulated as a function of the dynamic range of the said anti-roll actuator or controllable suspension.

7. Anti-roll system for a vehicle (1) having at least three wheels, comprising a means (11) for formulating a current roll-correction instruction as a function of the front wheel steering angle or of the lateral acceleration of the vehicle, of data regarding the movement of the vehicle, and of an earlier roll-correction instruction, and an anti-roll actuator (14 to 17) or a controllable suspension capable of influencing the stiffness of a suspension of the vehicle on receipt of the said current roll-correction instruction, **characterized in that** the said means for formulating a current instruction comprises a module for modelling the vehicle (23) comprising a front wheel steering angle or vehicle lateral acceleration input, a vehicle speed V of travel input, and an earlier rear wheel steering angle instruction input able to provide an estimate of at least one variable comprising a roll-angle output, a roll rate output and a filtered torque output.

8. System according to one of Claims 6 and 7, in which the said means for formulating an instruction comprises a transient-part regulating module (24) and a static-part regulating module (25).

9. System according to Claim 8, in which the said transient-part regulating module (24) comprises outputs connected to the inputs of the static-part regulating module, the static-part regulating module (25) further comprising a front wheel steering angle or vehicle lateral acceleration input and a vehicle speed V of travel input.

10. Vehicle (1) provided with a chassis (2) and with at least three steered wheels elastically linked to the chassis (2), comprising an anti-roll system comprising a means (11) for formulating a current roll-correction instruction as a function of the front wheel steering angle or of the lateral acceleration of the vehicle, of data regarding the movement of the vehicle, and of an earlier roll-correction instruction, and an anti-roll actuator (14 to 17) or a controllable suspension capable of influencing the stiffness of a suspension of the vehicle on receipt of the said current roll-correction instruction, **characterized in that** the said formulation of the current roll-correction instruction is performed as a function of a model of the vehicle comprising a front wheel steering angle or vehicle lateral acceleration input, a vehicle speed V of travel input and an earlier rear wheel steering angle instruction input and comprising a roll-angle output, a roll rate output and a filtered torque output.

**Patentansprüche**

1. Steuerverfahren für ein Rollverhinderungssystem für ein Fahrzeug mit wenigstens drei Rädern, in dem als Funktion des Vorderrad-Einschlagwinkels oder der Querbeschleunigung des Fahrzeugs, von Bewegungsdaten des Fahrzeugs und eines früheren Rollkorrektur-Sollwerts ein aktueller Rollkorrektur-Sollwert erarbeitet wird und dieser aktuelle Rollkorrektur-Sollwert zu einem Rollverhinderungsaktuator oder einer steuerbaren Aufhängung, die auf die Starrheit einer Fahrzeugaufhängung einwirken, geschickt wird, **dadurch gekennzeichnet, dass** der aktuelle Rollkorrektur-Sollwert anhand eines Modells des Fahrzeugs erarbeitet wird, das den Vorderrad-Einschlagwinkel oder die Querbeschleunigung des Fahrzeugs, die Bewegungsgeschwindigkeit V des Fahrzeugs und den früheren Hinterradeinschlag-Sollwert berücksichtigt und einen Ausgang für den Rollwinkel, einen Ausgang für die Rollgeschwindigkeit sowie einen Ausgang für das gefilterte Drehmoment enthält.

2. Verfahren nach Anspruch 1, wobei die Bewegungsdaten des Fahrzeugs die Längsgeschwindigkeit V des Fahrzeugs enthalten.

3. Verfahren nach Anspruch 1 oder 2, wobei die Bewegungsdaten des Fahrzeugs einen Messwert des Hinterrad-Einschlagwinkels enthalten.

4. Verfahren nach einem der vorhergehenden Ansprüche, wobei die dynamische Antwort des Fahrzeugs und die statische Antwort des Fahrzeugs auf getrennte Weise geregelt werden.

5. Verfahren nach einem der vorhergehenden Ansprüche, wobei der aktuelle Rollkorrektur-Sollwert in einer offenen Schleife erarbeitet wird.

6. Verfahren nach einem der vorhergehenden Ansprüche, wobei der Rollkorrektur-Sollwert als Funktion der Dynamik des Rollverhinderungsaktuators oder der steuerbaren Aufhängung erarbeitet wird.

7. Rollverhinderungssystem für ein Fahrzeug (1) mit wenigstens drei Rädern, das ein Mittel (11) zum Erarbeiten eines aktuellen Rollkorrektur-Sollwerts als Funktion des Vorderrad-Einschlagwinkels oder der Querbeschleunigung des Fahrzeugs, von Bewegungsdaten des Fahrzeugs und von einem früheren Rollkorrektur-Sollwert sowie einen Rollverhinderungsaktuator (14 bis 17) oder eine steuerbare Aufhängung, die bei Empfang des aktuellen Rollkorrektur-Sollwerts auf die Starrheit einer Aufhängung des Fahrzeugs einwirken, enthält, **dadurch gekennzeichnet, dass** das Mittel zum Erarbeiten eines aktuellen Sollwerts ein Modul (23) für die Modellierung des Fahrzeugs enthält, das einen Eingang für den Vorderrad-Einschlagwinkel oder die Querbeschleunigung des Fahrzeugs, einen Eingang für die Bewegungsgeschwindigkeit V des Fahrzeugs und einen Eingang für den früheren Hinterradeinschlag-Sollwert aufweist, eine Schätzung wenigstens einer Variablen liefern kann und einen Ausgang für den Rollwinkel, einen Ausgang für die Rollgeschwindigkeit und einen Ausgang für das gefilterte Drehmoment enthält.

8. System nach einem der Ansprüche 6 und 7, wobei das Mittel zum Erarbeiten eines Sollwerts ein Regelungsmodul (24) für den transitorischen Teil und ein Regelungsmodul (25) für den statischen Teil enthält.

9. System nach Anspruch 8, wobei das Regelungsmodul (24) für den transitorischen Teil Ausgänge aufweist, die mit den Eingängen des Regelungsmoduls für den statischen Teil verbunden sind, wobei das Regelungsmodul (25) für den statischen Teil außerdem einen Eingang für den Vorderrad-Einschlagwinkel oder die Querbeschleunigung des Fahrzeugs und einen Eingang für die Bewegungsgeschwindigkeit V des Fahrzeugs aufweist.

10. Fahrzeug (1), das mit ein Fahrwerk (2) und wenigstens drei lenkbaren Rädern, die mit dem Fahrwerk (2) elastisch verbunden sind, versehen ist, mit einem Rollverhinderungssystem, das ein Mittel (11) zum Erarbeiten eines aktuellen Rollkorrektur-Sollwerts als Funktion des Vorderrad-Einschlagwinkels oder der Querbeschleunigung des Fahrzeugs, von Bewegungsdaten des Fahrzeugs und eines früheren Rollkorrektur-Sollwerts, und einen Rollverhinderungsaktuator (14 bis 17) oder eine steuerbare Aufhängung, die bei Empfang des aktuellen Rollkorrektur-Sollwerts auf die Starrheit einer Aufhängung des Fahrzeugs einwirken, enthält, **dadurch gekennzeichnet, dass** das Erarbeiten des aktuellen Rollkorrektur-Sollwerts als Funktion eines Modells des Fahrzeugs erfolgt, das einen Eingang für den Vorderrad-Einschlagwinkel oder die Querbeschleunigung des Fahrzeugs, einen Eingang für die Bewegungsgeschwindigkeit V des Fahrzeugs und einen Eingang für einen früheren Hinterradeinschlag-Sollwert enthält und einen Ausgang für den Rollwinkel, einen Ausgang für die Rollgeschwindigkeit und einen Ausgang für das gefilterte Drehmoment enthält.

# FIG.1

## FIG.2

# FIG.3

# FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040117085 A
- US 4939654 A
- US 5004264 A

**Littérature non-brevet citée dans la description**

- **J. Kautsky ; N.K. Nichols.** Robust Pole Assignment in Linear State Feedback. *Int. J. Control,* 1985, vol. 41, 1129-1155